# EUROPÄISCHE PATENTANMELDUNG

(11) **EP 3 228 453 A1**
(43) Veröffentlichungstag der Anmeldung: **11.10.2017**
(21) Anmeldenummer: 17164092.3
(22) Anmeldetag: 31.03.2017
(51) Int. Cl.: B32B 7/12

(54) **RINGELBAND ZUM VERZIEREN VON GESCHENKEN**

(30) Priorität: 05.04.2016 DE 202016002170 U
(71) Anmelder: Goldina Loy GmbH & Co. KG, 86899 Landsberg am Lech (DE)
(72) Erfinder: Hackenberg, Till, 80469 München (DE)
(74) Vertreter: Laufhütte, Dieter

(57) **Zusammenfassung**

Die Erfindung betrifft ein Ringelband zum Verzieren von Geschenken, das eine flache Gestalt hat und zwei gegenüberliegende parallele Außenoberflächen aufweist, wobei das Band erfindungsgemäß schichtförmig aufgebaut ist und eine Trägerlage aus Kunststoff aufweist, wobei wenigstens eine Oberfläche der Trägerlage mit einer Deckenlage aus Papier kaschiert ist.

## Beschreibung

Die vorliegende Erfindung betrifft ein Ringelband zum Verzieren von Geschenken.

Ringelbare Geschenkbänder sind bekannt. Es handelt sich um meist farbige, dekorative Bänder, mit denen Geschenke verziert werden.

Aufgabe der Erfindung ist es, ein ringelbares Geschenkband bereitzustellen, welches neue Gestaltungsmöglichkeiten eröffnet.

Vor diesem Hintergrund betrifft die Erfindung ein Ringelband mit einer flachen Gestalt und zwei gegenüberliegenden parallelen Außenoberflächen, wobei das Band schichtförmig aufgebaut ist und eine Trägerlage aus Kunststoff aufweist. Wenigstens eine Oberfläche der Trägerlage ist mit einer Deckenlage aus Papier kaschiert.

In einer Ausführungsform stellt die Oberfläche der Deckenlage die Außenoberfläche des Bandes dar. So ist die Deckenlage also für die optische Erscheinung des Bandes verantwortlich und verleiht dem Band ein papierhaftes Aussehen, während die Trägerlage für die Reißfestigkeit und die Knotbarkeit des Bandes verantwortlich ist. Sowohl die Trägerlage als auch die Deckenlage können ringelbare Eigenschaften aufweisen, wobei diese typischerweise für die Trägerlage stärker ausgebildet sind. Unter ringelbaren Eigenschaften wird hierbei die Eigenschaft des generell flachen Bandes verstanden, sich nach einer Zugdehnung und teilelastischer Rückverformung zu ringeln. Die Zugdehnung kann in bekannter Weise durch Ziehen über eine scharfe Kante wie beispielsweise die Schneidkante einer Schere erfolgen.

In einer Ausführungsform besteht die Trägerlage aus Polypropylen. Dieses Material ist kostengünstig herzustellen und kann ein geeignetes Elastizitätsprofil aufweisen.

In einer Ausführungsform weist die Trägerlage eine Stärke von weniger als 0,2 mm auf. Beispielsweise sind Stärken von 0,1-0,15 mm vorteilhaft, um optimale Stabilität zu gewährleisten.

In einer Ausführungsform weist die Trägerlage elastische Materialeigenschaften auf, sodass sich die Trägerlage nach einer Dehnung zumindest teilweise wieder zusammenzieht.

In einer Ausführungsform besteht die Deckenlage aus Papier vorzugsweise aus Kraftpapier oder Natronkraftpapier.

In einer Ausführungsform ist das Papier der Deckenlage farbig und insbesondere farbig bedruckt. So kann das Band durch einfaches Bedrucken von Papier eine bestimmte Farbe annehmen oder mit einem bestimmten Design versehen werden, ohne dass eine Färbung der Trägerlage aus Kunststoff notwendig ist.

In einer Ausführungsform weist das Papier der Deckenlage ein Flächengewicht von 50-100 g/m² auf. Hierbei kann auf handelsübliche Kraftpapiere zurückgegriffen werden. Durch dieses Flächengewicht wird dem Band ein hochwertiger Charakter verliehen und die papierartige Erscheinung und Haptik wird unterstrichen.

In einer Ausführungsform ist die Deckenlage auf die Trägerlage geklebt. Dies ermöglicht eine besonders einfache Herstellung des Bandes.

In einer Ausführungsform sind beide Oberflächen der Trägerlage mit einer Deckenlage aus Papier kaschiert. Alle bisher für eine Deckenlage beschriebenen Ausgestaltungen sind in diesem Fall an beiden Deckenlagen möglich.

Weitere Einzelheiten und Vorteile der Erfindung ergeben sich aus dem nachfolgend anhand der Figuren beschriebenen Ausführungsbeispiel. In den Figuren zeigen:
- Figur 1:: eine Rolle eines erfindungsgemäßen Ringelbandes; und
- Figur 2:: unterschiedliche Blätter papierbeschichteter Kunststofffolien, aus denen ein erfindungsgemäßes Ringelband geschnitten werden kann.

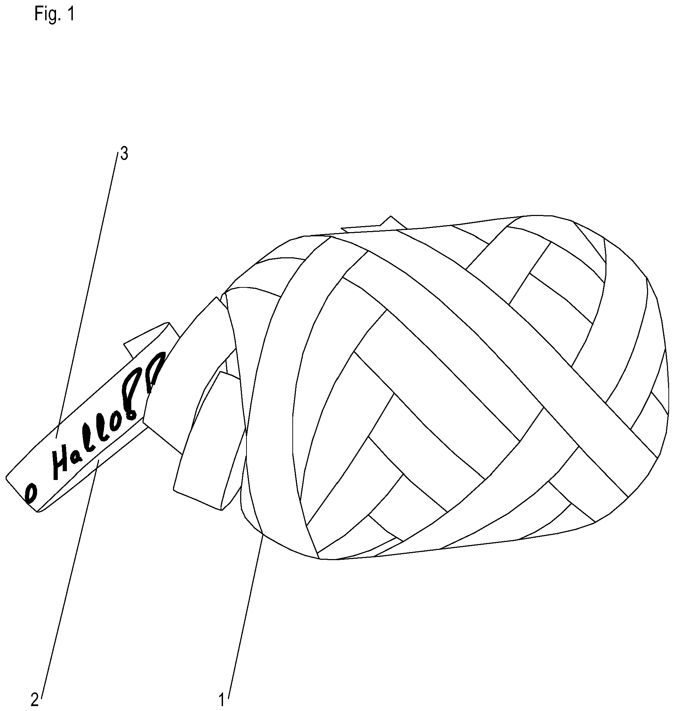

In Figur 1 wird ein erfindungsgemäßes Ringelband 1 zum Verzieren von Geschenken gezeigt. Das Band 1 hat eine längliche und flache Gestalt und weist zwei gegenüberliegende Oberflächen 2 und 3 auf, die parallel zueinander verlaufen.

Das Band 2 umfasst zwei Schichten, wobei eine 125 µm dünne Trägerlage aus elastischem Polypropylen einseitig mit einer Deckenlage aus Natronkraftpapier mit einem Flächengewicht von zwischen 60 und 80 g/m² überzogen ist, sodass das Band insgesamt ein papierhaftes Aussehen hat, während es sich aufgrund der Trägerlage nach einer Zugdehnung über eine Scherenkante und teilelastischer Rückverformung ringeln kann.

In einer Ausführungsform ist das Papier der Deckenlage mit Farbe bedruckt. So kann das Band durch einfaches Färben oder Bedrucken von Papier eine bestimmte Farbe annehmen oder mit einem bestimmten Design versehen werden, ohne dass eine Färbung der Trägerlage aus Kunststoff notwendig ist.

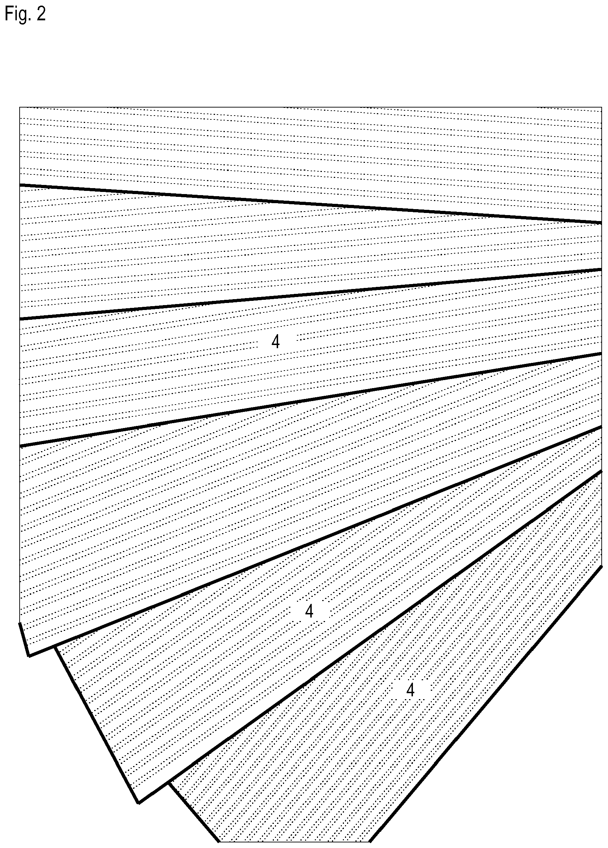

Bei der Herstellung wird eine Folie aus Polypropylen einseitig mit Kraftpapier kaschiert und verklebt, sodass ein papierartig aussehendes Blatt 4 entsteht, das in Figur 2 dargestellt ist und vorteilhafterweise sehr lang oder endlos ist. Aus diesem Blatt 4 können dann Streifen in der Breite des Bandes 2 geschnitten werden, um das erfindungsgemäße Band auf einfache Weise herzustellen. Das Papier kann dabei beispielsweise einfarbig bedruckt werden, um dem Band 2 die gewünschte Erscheinung zu geben.

Das Band hat das Aussehen von Papier, im gezeigten Beispiel Kraftpapier, lässt sich aber im Gegensatz zu reinen Papierbändern knoten. Hierdurch wird es erst möglich, dass das nach Papier aussehende Produkt als Geschenkband verwendet werden kann. Die Besonderheit des Produktes liegt darin, ein Band zu produzieren, dass dem Aussehen und der Haptik nach ein Papierprodukt ist, jedoch die Eigenschaften eines Geschenkbands (Ringelbands) hat.

## Patentansprüche

1. Ringelband zum Verzieren von Geschenken, das eine flache Gestalt hat und zwei gegenüberliegende parallele Außenoberflächen aufweist,
**dadurch gekennzeichnet,**
**dass** das Band schichtförmig aufgebaut ist und eine Trägerlage aus Kunststoff aufweist, wobei wenigstens eine Oberfläche der Trägerlage mit einer Deckenlage aus Papier kaschiert ist.

2. Verpackungsband nach Anspruch 1, **dadurch gekennzeichnet, dass** die Oberfläche der Deckenlage die Außenoberfläche des Bandes darstellt.

3. Verpackungsband nach einem der vorhergehenden Ansprüche, **dadurch gekennzeichnet, dass** die Trägerlage aus Polypropylen besteht.

4. Verpackungsband nach einem der vorhergehenden Ansprüche, **dadurch gekennzeichnet, dass** die Trägerlage eine Stärke von weniger als 0,2 mm aufweist.

5. Verpackungsband nach einem der vorhergehenden Ansprüche, **dadurch gekennzeichnet, dass** die Trägerlage elastisch ist.

6. Verpackungsband nach einem der vorhergehenden Ansprüche, **dadurch gekennzeichnet, dass** es sich beim Papier der Deckenlage um Kraftpapier oder Natronkraftpapier handelt.

7. Verpackungsband nach einem der vorhergehenden Ansprüche, **dadurch gekennzeichnet, dass** das Papier der Deckenlage farbig und insbesondere einfarbig bedruckt ist.

8. Verpackungsband nach einem der vorhergehenden Ansprüche, **dadurch gekennzeichnet, dass** das Papier der Deckenlage ein Flächengewicht von 50-100 g/m² aufweist.

9. Verpackungsband nach einem der vorhergehenden Ansprüche, **dadurch gekennzeichnet, dass** die Deckenlage auf die Trägerlage geklebt ist.

10. Verpackungsband nach einem der vorhergehenden Ansprüche, **dadurch gekennzeichnet, dass** beide Oberflächen der Trägerlage mit einer Deckenlage aus Papier kaschiert sind.
